# EUROPEAN PATENT SPECIFICATION

(11) **EP 1 878 666 B1**
(45) Date of publication and mention of the grant of the patent: **08.09.2010**
(21) Application number: 06300807.2
(22) Date of filing: 13.07.2006
(51) Int. Cl.: B65D 17/50

(54) **Container lid equipped with a peelable membrane.**
Behälterdeckel mit einer abziehbaren Membrane
Couvercle de récipient avec membrane pelable.

(43) Date of publication of application: 16.01.2008
(73) Proprietor: Impress Metal Packaging SA, 72200 La Flèche (FR)
(72) Inventor: JONGSMA, Jelmer Eelke, 72200, LA FLECHE (FR); JOUILLAT, Jean-François, 49150, BAUGE (FR)
(74) Representative: Michelet, Alain

(56) References cited:
- EP-A- 1 595 808
- EP-A2- 0 408 268
- GB-A- 849 076
- US-A- 3 380 622
- US-A- 3 671 356
- US-A- 4 540 105
- US-A- 5 020 955
- US-B2- 6 601 727

## Description

The present invention relates to the field of the packages or containers sealed by a lid comprising a ring defining an opening which is closed by a membrane of the "peelable" type, that is to say a membrane joined with a peripheral surface of said ring by means of a layer of matter known as "sealant layer", according to the preamble of claim 1. It also relates to a process to manufacture said lids and to an installation to implement said process.
This kind of container is very generally used for the conditioning of foodstuffs, but it can also be used for conditioning some other industrial products, such as paints for example.

The containers of peelable membrane type, for example described in document EP-1 595 808, comprise a body, generally made of metal, on the upper edge of which a sealing lid is affixed, for example by a seaming operation.

EP-1 595 808 also describes a lid according to the preamble of claim 1.

This sealing lid consists in a metal ring whose outer border is seamed with the body of the container, and whose upper face of its inner border receives by bonding a peelable membrane. This peelable membrane includes several layers of matter, at least: a base layer made of flexible and resistant material, forming a barrier, for example made of aluminium, arranged with a sealant layer, for example constituted of a mix of polypropylene and polyethylene.
The sealant layer is a surface coating layer, arranged on the side of the lower face of the base layer.
In addition, under the sealant layer aforementioned, a layer known as "peeling layer" can be arranged, said peeling layer being also constituted of a mixture of polypropylene and polyethylene; another layer known as "adhesive layer", made of grafited polypropylene, can also be interposed between the base layer and the peeling layer.

The various functional layers associated with the base layer have each one a constant initial thickness, about several micrometers (2 to 15 micrometers generally).

To be complete, facing the peelable membrane aforesaid, the upper surface of the ring can also be covered of one or several functional layers of matter, in particular sealant layer or functional layers as adhesive layers.

The peelable membrane is joined by heat sealing with the ring of lid by means of adapted jaws. The sealant layer provides the required function of bonding and also carries out the function of peeling layer for the opening, in case of absence of distinct peeling layer.
Of course, if the distinct peeling layer is present, this is said peeling layer which is used for the peeling of the membrane, after the breaking of the thickness of the sealant layer.

The aforesaid junction between the peelable membrane and the ring of lid is made on a peripheral joining strip or surface, delimited by an inner border and an outer border, corresponding to the active surface of the heat sealing jaws.
At this strip or this peripheral joining surface, the various functional layers arranged on the base layer of the peelable membrane, and possibly on the ring of lid, are crushed between these sealing jaws. Finally, after heat sealing, the various corresponding layers have a constant thickness at said joining surface.
Moreover because of this crushing, a small bead of matter is generally formed outside of said joining surface, on the side of its inner border and on the side of its outer border; however, this small bead of matter does not take part or practically not take part in the required joining action.

Generally, a pulling tab prolongs the peelable membrane laterally. After closing, the opening of the container is obtained by a manual traction on this pulling tab, the peelable membrane being gradually peeled from the ring of lid, by propagation of the rupture of the sealant layer, and, if there is a peeling layer, by propagation of the rupture of this peeling layer.

It is well understood that it is important to obtain a sufficiently strong joining force of the peelable membrane with the ring, so that the container is effectively sealed (in particular before its opening). But, on the other hand, it is also as important that the consumer has the possibility of removing easily this peelable membrane when he needs to open the container, without requiring the used of some too great peeling efforts.
It is thus necessary to take account of these two requirements, and as a consequence to have a compromise between the values of said two antagonistic efforts.

In practice, it would be really interesting to use containers of peelable membrane type also with foodstuff which needs to undergo some operations of traditional sterilization.
However, such known containers with peelable closures are not adapted to resist correctly to such operations of sterilization, in particular because the interne overpressure in the package, developed during said operations, exceeds the resistance of the peelable membrane against the opening.

The present invention proposes a solution to this problem, that is to say to obtain a system for closing the container of the peelable membrane type, which has a better resistance against the differential of pressure above-mentioned, during the sterilization in particular, and which, at the same time, allows the consumer to remove easily this membrane by traction.

For this purpose, the container lid, comprising a ring defining an opening, said opening being closed by a membrane of "peelable" type, which peelable membrane is joined to a peripheral surface of said ring, said joining surface being delimited by an inner border and an outer border, by means of a layer of matter known as sealant layer constituting a surface coating layer of said ring and / or said peelable membrane, is characterised in that, on at least a part of the circumference of said joining surface, the thickness of the sealant layer is variable in the radial direction, that is to say on its width, forming a width of variable thickness, this thickness increasing on at least a part of the width of said joining surface, in the direction from its outer border towards its inner border.
A thick sealant layer at the interior boundary of the sealed zone will have an increasing effect on the internal pressure resistance; and a thin sealant layer at the exterior of the sealed zone will have a decreasing effect on the peel force. By differentiating the thickness of the sealant layer, the two mechanical properties can both be influenced in a positive way.

Preferably, on said width of variable thickness, the thickness of the sealant layer at the inner border of the joining surface is higher than its thickness at the outer border of said joining surface.
Furthermore, on said width of variable thickness, the thickness of the sealant layer increases from the outer border towards the inner border of the joining surface, this in a continuous or discontinuous manner.
Advantageously, on said width of variable thickness, the thickness of the sealant layer at the inner border of the joining surface is at least twice higher than the thickness of said sealant layer at the part where said sealant layer is the less thick.

In a first embodiment, the sealant layer constitutes the surface coating layer of its ring ; and in a second embodiment, the sealant layer constitutes the surface coating layer of its peelable membrane.

On the ring or on the peelable membrane, according to the case, the sealant layer is advantageously directly joined to a distinct peeling layer, the thickness of said peeling layer being variable in the same manner and at the same zones as the variable thickness of the sealant layer.
In this case, the ring or the peelable membrane may comprise a complementary adhesive layer of matter, arranged on the face of the peeling layer opposite to the sealant layer, the thickness of said complementary adhesive layer being variable in the same manner and at the same zones as the variable thickness of the sealant and peeling layers.

Preferably, the peelable membrane is provided with a pulling tab.

According to an embodiment, the width of variable thickness of the sealant layer, and eventually of the peeling layer, according to the case, extends only on a part of the circumference of the joining surface, facing said pulling tab.

According to another embodiment, the width of variable thickness of the sealant layer, and eventually of the peeling layer and of the adhesive layer, according to the case, extends to all the circumference of the joining surface.

The invention relates also to a process for manufacturing the aforesaid lid, which process comprises the following steps:
- providing a ring and a membrane, one or the other, at least, having a sealant layer, and eventually a peeling layer, each initially having a constant thickness,
- heat sealing said ring and said membrane, at a joining surface, between sealing jaws, said sealing jaws comprising means for applying a differential pressure on the width of said joining surface so that the thickness of said sealant layer, and eventually the one of said peeling layer, is variable from the outer border towards the inner border of said joining surface, this on at least a part of the circumference of said joining surface.

In a preferred embodiment, the process consists in heat sealing said ring and said membrane, between two sealing jaws comprising means to apply a differential pressure over the width of at least a part of the circumference of the joining surface, so that the thickness of the sealant layer and the one of said peeling layer, increases from the outer border towards the inner border of said joining surface, this at said part of circumference, in a continuous or discontinuous manner.

Advantageously, the step of heat sealing produces a creep of matter of the sealant layer, and eventually of the matter at least of the peeling layer, from the outer border towards the inner border of the joining surface.

The invention relates also to the installation for implementing the aforesaid process, wherein the sealing jaws are of general annular shape and said means for applying a differential pressure consist in active opposite faces of said sealing jaws, said active opposite faces being shaped so that, after the step of heat sealing, the thickness of the sealant layer and eventually the peeling layer, on at least a part of the circumference of the joining surface, is variable in the radial direction, that is to say on its width, forming a width of variable thickness, said thickness increasing on at least a part of said joining surface, in the direction from its outer border towards its inner border.

In a preferred embodiment, the sealing jaws have active opposite faces arranged slightly divergent from outside towards inside, in a continuous or discontinuous manner over the entire width of said opposite active faces. Advantageously, the opposite active faces of the sealing jaws diverge, from outside towards inside, according to an average angle ranging from 0,1° to 3°.

The invention will also be illustrated, without being limited, by the following description of several possible embodiments, only given as examples, and according to the accompanying drawings wherein:
- figure 1 is a schematic and cross-sectional view of a part of a container lid of the membrane peelable type, before being seamed with the body of container;
- figure 2 shows, always in a schematic and cross-sectional view, the lid of figure 1 seamed with the body of the container;
- figure 3 is a partial and enlarged view of figure 2 in which appears the bonding means of the peelable membrane on the ring of lid;
- figure 4 is a schematic and cross-sectional view, illustrating a possible structure of the peelable membrane, before joining on the ring of lid;
- figure 5 is a schematic cross-sectional view, illustrating the peelable membrane of figure 4 bonded on the ring of lid, to obtain a lid structure according to the present invention;
- figure 6 is also a schematic and cross-sectional view which shows the beginning of the opening of the peelable membrane of the lid structure illustrated on figure 5;
- figure 7 is still a schematic cross-sectional view, which shows another structure of lid according to the invention, during the opening of the peelable membrane.

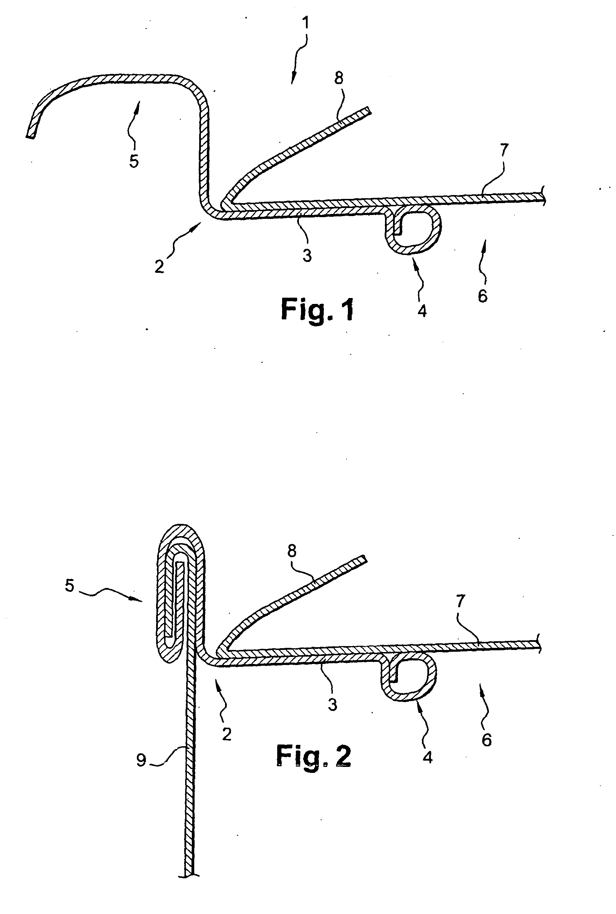

Figure 1 shows a structure of lid 1 for a peelable membrane container type. This lid 1 comprises a metal ring 2, for example made of steel or of aluminium, having a plane central part 3 delimited, on the one hand, by a rolled or curled inner border 4, and on the other hand, by a free outer border 5 arranged to be seamed on the upper edge of the body of a container (as described here-bellow according to figure 2).

The inner border 4 delimits an opening 6 which is sealed by a flexible membrane 7, of peelable type, whose the lower face of its peripheral border is bonded on the upper face of the plane central part 3 of the ring 2. At a zone of its peripheral border, the peelable membrane 7 comprises a gripping or pulling tab 8, aiming at facilitating its separation from the ring 2 by the consumer.

Once prepared, the lid 1 is affixed to the upper border of the body of container 9, after the filling of said body (for example with foodstuff), by means of a traditional seaming operation of its external edge 5, such as illustrated figure 2.

The closed container, partially illustrated figure 2, is thus obtained.

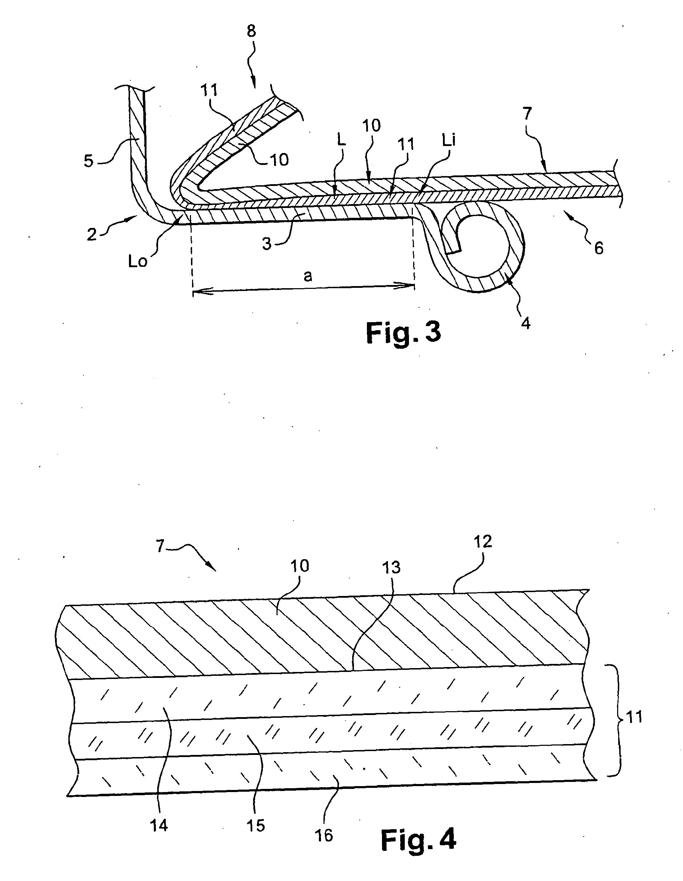

In a traditional manner, such illustrated figure 3, the peelable membrane 7 comprises a base layer 10, named "barrier" layer, made of resistant and flexible material, for example of aluminium, whose lower face, directed to the inner side of the container, is covered by a matrix 11, itself formed of one or several layers of matter, adapted in particular to ensure the required joining above-mentioned.

A possible structure of such a peelable membrane 7 is schematically illustrated on figure 4.

The corresponding peelable membrane 7 is made of a base layer 10, for example of aluminium, having some micrometers of thickness.
The face 12 of this base layer 10, intended to be placed at the external side of the container, can receive one or more layers, for example of polyethylene to provide tearing resistance or for printing, which are not represented in order to simplify the specification.

On the other side, the face 13 of this base layer 10, intended to be directed towards the interior of container and towards the upper surface of the ring of lid 2, is covered of a layer of matter of the "adhesive" type 14, for example made of grafited polypropylene and having 2 to 15 micrometers of thickness. This adhesive layer 14 is itself covered of a layer of matter 15 of "peelable" type, for example made of polyethylene and polypropylene blend having 15 to 80 micrometers of thickness. And this peeling layer 15 is covered by an outer sealant layer 16, for example made of polypropylene having 2 to 15 micrometers of thickness.

In a known and traditional manner, the various layers of matter 14, 15 and 16 are assembled, the ones after the others, on the entire surface of the base layer 10 (also on its tab part 8).These layers of matter 14, 15 and 16 form the above-mentioned matrix 11.

To obtain the lid of container 1, the membrane 7, prepared as indicated above, is bounded on the metal ring 2 by means of heat sealing jaws which, once the two parts 7 and 2 suitably arranged one compared to the other, come to apply a pressure under the plane central part 3 of the ring 2 and on the membrane 7, on a surface or strip L defined by the application surface of the opposite active faces of these sealing jaws. This joining surface or strip L is generally annular, but it can of course have any other shape.

The corresponding bounding of the peelable membrane 7 on the ring of lid 2 is obtained thanks to the external sealant layer 16, by combined actions of heat and of pressure.

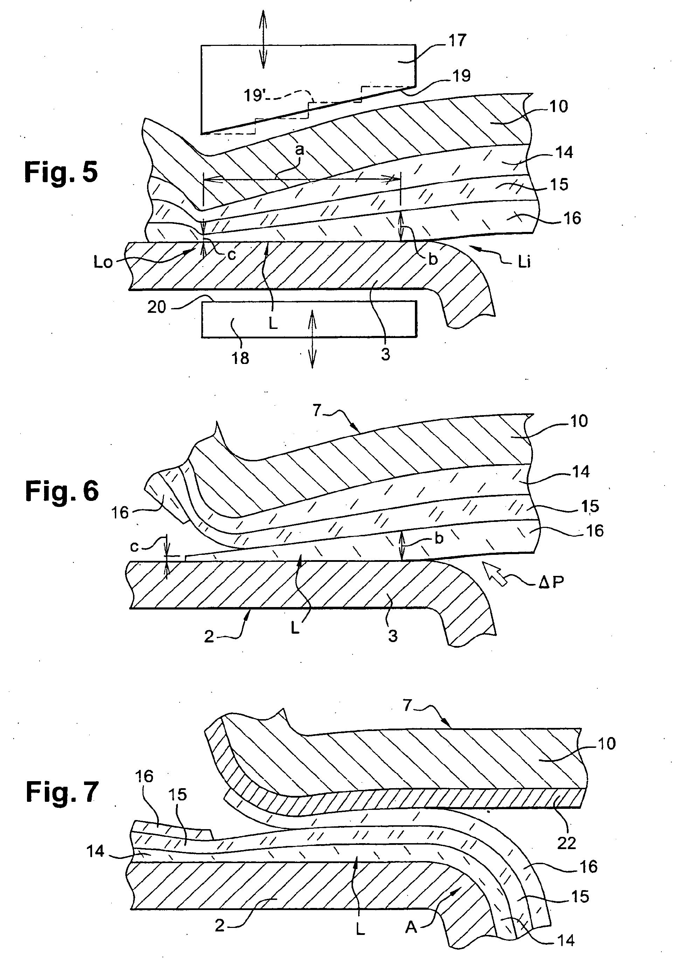

According to this invention, the required variable thickness of the sealant layer 16 over the width of joining surface, as above-mentioned, can be obtained, in accordance with the schematic representation of figure 5, by application of a differential of pressure of sealing jaws 17 and 18 over the width (marked as a) of the joining surface L.

As it can be seen on figure 5, the corresponding differential of pressure is obtained by a slight divergence from the external towards the interior of the opposite active faces 19 and 20 of the jaws 17 and 18. During the pressing operation, it can be understood that this particular shape of jaws 17, 18 allows obtaining a sealant layer 16 whose thickness is more important on the side of the inner border Li of the joining surface L than on the side of the outer border Lo of this joining surface L.
This is illustrated at figure 5 by the thicknesses b and c of the sealant layer 16, where b is higher than c.

The corresponding differential of pressure generates the same effect on the peeling layer 15 and also on the adhesive layer 14, the thickness of these layers 14 and 15 being finally more important at the side of the inner border of the joining surface L than the one at the side of the outer border of this joining surface L.

On figure 5, the shape of jaws 17, 18 is such as it is obtained a continuous increase of the thickness of the sealant layer 16 from the outer border Lo of the joining surface L to the inner border Li of this surface L.
It can also be obtained a similar increase of thickness, this in a levelled, staged or discontinuous shape, for example by using a jaw 17 comprising a staged active surface 19', such illustrated in dotted lines on figure 5.

Within the framework of the embodiment represented figure 5, the active faces of jaws 19 - 20 or 19' - 20 diverge from outside towards inside according to an average angle ranging between 0,1° and 3°. On figure 5, the angle applied has been exaggerated, voluntarily, to facilitate comprehension.

In practice, to obtain interesting results, it will be searched for the greatest thickness of the sealant layer 16 being located on the side of the inner border of the joining surface L. In particular, it will be search for the thickness of the sealant layer 16 on the side of the inner border Li of the joining surface L being at least twice higher than the thickness of this sealant layer 16 by the place where this layer is the less thick.

It will be noted that the required thickness increase of the sealant layer 16 can be made on only a part of the width a of the joining surface L, this between its inner and outer borders, and at any place of this width a ; thus, any other shape of jaw can be used, as long as the thickness increase in the outside-inside direction of the sealant layer 16 is obtained on a zone at least comprised between the outer border and the inner border of the joining surface L.

More generally, in function of the required final result in term of thickness of layers on the joining surface L, and also in term of range and of localization of the thickness variations, it will be adapted:
- the nature and the initial thickness of the layers 14, 15 and 16 assembled on the base layer 10 of the peelable membrane 7, and
- the shape of jaws 17, 18, and also their characteristics of use,
This, in particular, by taking account of the thickness reduction of the layers 14, 15 and 16 at the time of the application of the jaws 17 and 18, and also the creep of matter related to the particular shape of the active faces of the aforesaid jaws.

The thickness variation over the width a of the joining surface L can be carried out on all the periphery of this joining surface, or simply on part of this periphery. In this last case, it will advantageously be carried out on a zone located facing to the pulling tab 8.

It can thus be envisaged a lid of container 1 in which the thickness of the sealant layer 16 on the side of the inner border of the joining surface L is sufficiently important for well resisting to the differential of pressure ΔP between the interior and the exterior of the container, appearing during the operations of sterilization in particular, and in which the thickness of this sealant layer 16 on the side of the outer border of the joining surface L is sufficiently thin to limit the efforts necessary to remove the peelable membrane 7.
This is what is illustrated on figure 6, where the thickness b allows to well resist the ΔP indicated, and where the thickness c is adapted to allow an easy break of the sealant layer 16, this break allowing then the peeling layer 15 to play its function fully.

Moreover, it will be noted that the thickness variations obtained on the adhesive layer 14 and the peeling layer 15, in the same direction and in the same manner that the sealant layer 16, optimize the resistance properties on the side of the inner border of the joining surface L, and the simplicity for opening, on the side of the outer border of this joining surface.

Figure 7 illustrates an alternative embodiment of the invention in which it is the ring of lid 2 which initially receives the matrix 11 made of an adhesive layer 14, of a intermediate peeling layer 15 and of an external sealant layer 16, the base layer 10 of the peelable membrane 7 comprising, on its side, a simple lower sealing layer 22.
After suitable positioning of membrane 7 on the ring of lid 2, the two sealing layers 16 and 22 being arranged facing one to the other, the sealing jaws are applied in the manner illustrated figure 5, to obtain the fixation by heat sealing of the two elements (2, 7), with the thickness variation required of the sealant layer 16 (or 16-22).

This particular embodiment can have some advantages in term of manufacture and of production cost. It also allows to optimize the opening characteristics of the container, by preventing, at the time of removal of the peelable membrane, that the rupture of the sealant and peeling layers is propagated on the outside of the joining surface. Indeed, at the time of the removal of the peelable membrane 7, after the "break" of the sealant layer 16 (figure 7), the peeling rupture can be propagated on all the surface of the joining surface, but it will stop beyond, owing to the fact that the sealant layer 16 and the peeling layer 15 follow the interne angle A of the inner border of the plane part 3 of the ring of lid 2, and thus change of extension direction, compared to the peeling plan (thus causing a zone of rupture).

Except the fact that the sealant layer 16 and peeling layer 15 are arranged on the ring of lid 2, the implementation and the characteristics of this alternative embodiment correspond to those of the previous embodiment, described in relation to figure 5.

Of course, the invention is not limited to the embodiments described above. Thus, in particular:
- the assembled functional layers on the base layer of the peelable membrane, and possibly on the ring of lid, can be in a different number and also of different nature. In particular, it is possible to have only a sealant layer (on the base layer of the peelable membrane and/or on the ring of lid) also playing the action of peeling layer.
- the nature of the base layer of the peelable membrane and the one of the ring of lid can be different from those indicated above, and be for example made of plastic matter or even of glass.
- other types of joining means, instead of the heat sealing jaws, can also be used.
- also, the required variation of thickness of the sealant layer and possibly of the peeling layer can be obtained by any other means. For example, it can be assembled since the origin some layers of matter of variable thickness on the base layer of the peelable membrane and/or on the ring of lid, and then to use a traditional installation with heat sealing jaws.

## Claims

1. Container lid comprising a ring (2) defining an opening (6), said opening (6) being closed by a membrane (7) of "peelable" type, which peelable membrane (7) is joined to a peripheral surface (L) of said ring (2), said joining surface (L) being delimited by an inner border (Li) and an outer border (Lo), by means of a layer of matter (16) known as sealant layer constituting a surface coating layer of said ring (2) and/or of said peelable membrane (7), **characterised in that**, on at least a part of the circumference of said joining surface (L), the thickness of the sealant layer (16) is variable in the radial direction, that is to say on its width, forming a width of variable thickness, this thickness increasing on at least a part of the width of said joining surface (L), in the direction from its outer border (Lo) towards its inner border (Li).

2. Container lid according to claim 1, wherein on said width of variable thickness, the thickness of the sealant layer (16) at the inner border (Li) of the joining surface (L) is higher than its thickness at the outer border (Lo) of said joining surface (L).

3. Container lid according to any of claims 1 or 2, wherein on said width of variable thickness, the thickness of the sealant layer (16) increases from the outer border (Lo) towards the inner border (Li) of the joining surface (L), this in a continuous or discontinuous manner.

4. Container lid according to any of claims 1 to 3, wherein on said width of variable thickness, the thickness of the sealant layer (16) at the inner border (Li) of the joining surface (L) is at least twice higher than the thickness of said sealant layer (16) at the part where said sealant layer (16) is the less thick.

5. Container lid according to any of claims 1 to 4, wherein the sealant layer (16) constitutes the surface coating layer of its ring (2).

6. Container lid according to any of claims 1 to 4, wherein the sealant layer (16) constitutes the surface coating layer of its peelable membrane (7).

7. Container lid according to any of claims 1 to 6, wherein on the ring (2) or on the peelable membrane (7), according to the case, the sealant layer (16) is directly joined to a distinct peeling layer (15), the thickness of said peeling layer (15) being variable in the same manner and at the same zones as the variable thickness of the sealant layer (16).

8. Container lid according to claim 7, wherein the ring (2) or the peelable membrane (7), according to the case, comprises a complementary adhesive layer of matter (14), arranged on the face of the peeling layer (15) opposite to the sealant layer (16), the thickness of said complementary adhesive layer (14) being variable in the same manner and at the same zones as the variable thickness of the sealant and peeling layers (16, 15).

9. Container lid according to any of claims 1 to 8, wherein the peelable membrane (7) is provided with a pulling tab (8).

10. Container lid according to claim 9, wherein the width of variable thickness of the sealant layer (16), and eventually of the peeling layer (15), according to the case, extends only on a part of the circumference of the joining surface (L), facing said pulling tab (8).

11. Container lid according to any of claims 1 to 8, wherein the width of variable thickness of the sealant layer (16), and eventually of the peeling layer (15) and of the adhesive layer (14), according to the case, extends to all the circumference of the joining surface (L).

12. Container equipped with a lid (1) according to any of claims 1 to 11.

13. Process for manufacturing a lid according to any of claims 1 to 11, which comprises the following steps:
- providing a ring (2) and a membrane (7), one or the other, at least, having a sealant layer (16), and eventually a peeling layer (15), each initially having a constant thickness,
- heat sealing said ring (2) and said membrane (7), at a joining surface (L), between sealing jaws (17, 18), said sealing jaws comprising means (19, 19'; 20) for applying a differential pressure on the width of said joining surface (L) so that the thickness of said sealant layer (16), and eventually the one of said peeling layer (15), is variable from the outer border (Lo) towards the inner border (Li) of said joining surface (L), this on at least a part of the circumference of said joining surface (L).

14. Process according to claim 13, wherein it consists in heat sealing said ring (2) and said membrane (7), between two sealing jaws (17, 18) comprising means to apply a differential pressure over the width of at least a part of the circumference of the joining surface (L), so that the thickness of the sealant layer (16) and the one of said peeling layer (15), increases from the outer border (Lo) towards the inner border (Li) of said joining surface (L), this at said part of circumference, in a continuous or discontinuous manner.

15. Process according to claim 14, wherein the step of heat sealing produces a creep of matter of the sealant layer (16), and eventually of the matter at least of the peeling layer (15), from the outer border (Lo) towards the inner border (Li) of the joining surface (L).

16. Installation for implementing the process according to any of claim 13 to 15, wherein the sealing jaws (17, 18) are of general annular shape and said means for applying a differential pressure consist in active opposite faces (19, 19'; 20) of said sealing jaws (17, 18), said active opposite faces (19, 19'; 20) being shaped so that, after the step of heat sealing, the thickness of the sealant layer (16) and eventually the peeling layer (15), on at least a part of the circumference of the joining surface (L), is variable in the radial direction, that is to say on its width, forming a width of variable thickness, said thickness increasing on at least a part of said joining surface (L), in the direction from its outer border (Lo) towards its inner border (Li).

17. Installation according to the claim 16, wherein the sealing jaws (17, 18) have active opposite faces (19, 19' ; 20) arranged slightly divergent from outside towards inside, in a continuous or discontinuous manner over the entire width of said opposite active faces (19, 19' ; 20).

18. Installation according to the claim 17, wherein the opposite active faces (19, 19' ; 20) of the sealing jaws are divergent, from outside towards inside, according to an average angle ranging from 0,1° to 3°.

## Patentansprüche

1. Behälterdeckel, umfassend einen Ring (2), welcher eine Öffnung (6) definiert, wobei die Öffnung (6) durch eine Membran (7) von "abziehbarer" Bauart verschlossen ist, wobei die abziehbare Membran (7) mit einer Umfangsfläche (L) des Rings (2), wobei die Fügungsfläche (L) durch eine innere Grenze (Li) und eine äußere Grenze (Lo) begrenzt ist, durch eine Materialschicht (16), bekannt als Dichtungsschicht, welche eine Flächenbeschichtungsschicht des Rings (2) und/oder der abziehbaren Membran (7) darstellt, zusammengefügt ist, **dadurch gekennzeichnet, dass** auf wenigstens einem Teil des Umfangs der Fügungsfläche (L) die Dicke der Dichtungsschicht (16) in der radialen Richtung variabel ist, was soviel heißt, wie dass auf ihrer Breite, welche eine Breite der variablen Dicke ausbildet, diese Dicke an wenigstens einem Teil der Breite der Fügungsfläche (L) in der Richtung von ihrer äußeren Grenze (Lo) in Richtung ihrer inneren Grenze (Li) zunimmt.

2. Behälterdeckel nach Anspruch 1, wobei auf der Breite variabler Dicke die Dicke der Dichtungsschicht (16) an der inneren Grenze (Li) der Fügungsfläche (L) höher ist als ihre Dicke an der äußeren Grenze (Lo) der Fügungsfläche (L).

3. Behälterdeckel nach einem der Ansprüche 1 oder 2, wobei auf der Breite variabler Dicke die Dicke der Dichtungsschicht (16) von der äußeren Grenze (Lo) in Richtung der inneren Grenze (Li) der Fügungsfläche (L) zunimmt, wobei dies in kontinuierlicher oder in nicht kontinuierlicher Weise geschieht.

4. Behälterdeckel nach einem der Ansprüche 1 bis 3, wobei auf der Breite variabler Dicke die Dicke der Dichtungsschicht (16) an der inneren Grenze (Li) der Fügungsfläche (L) wenigstens zweimal höher ist als die Dicke der Dichtungsschicht (16) an dem Teil, wo die Dichtungsschicht (16) weniger dick ist.

5. Behälterdeckel nach einem der Ansprüche 1 bis 4, wobei die Dichtungsschicht (16) die Flächenbeschichtungsschicht des Rings (2) darstellt.

6. Behälterdeckel nach einem der Ansprüche 1 bis 4, wobei die Dichtungsschicht (16) die Flächenbeschichtungsschicht der abziehbaren Membran (7) darstellt.

7. Behälterdeckel nach einem der Ansprüche 1 bis 6, wobei auf dem Ring (2) oder auf der abziehbaren Membran (7) fallgemäß die Dichtungsschicht (16) direkt mit einer eigenen Abziehschicht (15) zusammengefügt ist, wobei die Dicke der Abziehschicht (15) auf die gleiche Weise und an den gleichen Abschnitten variabel ist wie die variable Dicke der Dichtungsschicht (16).

8. Behälterdeckel nach Anspruch 7, wobei der Ring (2) oder die abziehbare Membran (7) fallgemäß eine komplementäre Klebeschicht von Material (14) umfasst, welche auf der Fläche der Abziehschicht (15) gegenüber der Dichtungsschicht (16) angeordnet ist, wobei die Dicke der komplementären Klebeschicht (14) auf die gleiche Weise und an den gleichen Abschnitten variabel ist wie die variable Dicke der Dichtmittel- und der Abziehschichten (16, 15).

9. Behälterdeckel nach einem der Ansprüche 1 bis 8, wobei die abziehbare Membran (7) mit einer Aufreißlasche (8) versehen ist.

10. Behälterdeckel nach Anspruch 9, wobei sich die Breite der variablen Dicke der Dichtungsschicht (16) und
letztlich der Abziehschicht (15) fallgemäß nur auf einem Teil des Umfangs der Fügungsfläche (L), welcher der Aufreißlasche (8) zugewandt ist, erstreckt.

11. Behälterdeckel nach einem der Ansprüche 1 bis 8, wobei sich die Breite der variablen Dicke der Dichtungsschicht (16) und letztlich der Abziehschicht (15) und der Klebeschicht (14) fallgemäß auf den gesamten Umfang der Fügungsfläche (L) erstreckt.

12. Behälter, ausgestattet mit einem Deckel (1) nach einem der Ansprüche 1 bis 11.

13. Vorgang zur Herstellung eines Deckels nach einem der Ansprüche 1 bis 11, welcher die folgenden Schritte umfasst:
- Bereitstellen eines Rings (2) und einer Membran (7), wobei der eine oder die andere wenigstens eine Dichtungsschicht (16) aufweist und letztlich eine Abziehschicht (15), wobei jede anfänglich eine konstante Dicke aufweist,
- Warmversiegeln des Ringes (2) und der Membran (7) an einer Fügungsfläche (L) zwischen Dichtungsbacken (17, 18), wobei die Dichtungsbacken Mittel (19, 19'; 20) zum Anlegen eines unterschiedlichen Drucks auf die Breite der Fügungsfläche (L) umfassen, so dass die Dicke der Dichtungsschicht (16) und letztlich der einen Abziehschicht (15) variabel von der äußeren Grenze (Lo) in Richtung zur inneren Grenze (Li) der Fügungsfläche (L) ist, wobei dies auf wenigstens einem Teil des Umfangs der Fügungsfläche (L) der Fall ist.

14. Vorgang nach Anspruch 13, wobei es Warmversiegeln des Ringes (2) und der Membran (7) zwischen zwei Dichtungsbacken (17, 18) umfasst, welche Mittel zum Anlegen eines unterschiedlichen Drucks auf die Breite wenigstens eines Teils des Umfangs der Fügungsfläche (L) umfassen, so dass die Dicke der Dichtungsschicht (16) und der einen Abziehschicht (15) von der äußeren Grenze (Lo) in Richtung zur inneren Grenze (Li) der Fügungsfläche (L) zunimmt, wobei dies auf dem Teil des Umfangs in einer kontinuierlichen oder nicht kontinuierlichen Weise erfolgt.

15. Vorgang nach Anspruch 14, wobei der Schritt des Warmversiegelns eine Kriechverformung von Material der Dichtungsschicht (16) und letztlich des Materials wenigstens der Abziehschicht (15) von der äußeren Grenze (Lo) in Richtung zur inneren Grenze (Li) der Fügungsfläche (L) erzeugt.

16. Anlage zur Umsetzung des Vorgangs nach einem der Ansprüche 13 bis 15, wobei die Dichtungsbacken (17, 18) von ringförmiger Gestalt sind und die Mittel zum Anlegen eines unterschiedlichen Drucks aktive, gegenüberliegende Flächen (19, 19'; 20) der Dichtungsbacken (17, 18) umfassen, wobei die aktiven, gegenüberliegenden Flächen (19, 19'; 20) so gestaltet sind, dass nach dem Schritt des Warmversiegelns die Dicke der Dichtungsschicht (16) und letztlich der Abziehschicht (15) auf wenigstens einem Teil des Umfangs der Fügungsfläche (L) in der radialen Richtung variabel ist, das heißt auf ihrer Breite, wobei sie eine Breite von variabler Dicke ausbildet, welche auf wenigstens einem Teil der Fügungsfläche (L) in die Richtung von ihrer äußeren Grenze (Lo) zur inneren Grenze (Li) zunimmt.

17. Anlage nach Anspruch 16, wobei die Dichtungsbacken (17, 18) aktive, gegenüber liegende Flächen (19, 19'; 20) aufweisen, welche leicht auseinander gehend von außen nach innen auf eine kontinuierliche oder nicht kontinuierliche Weise über die gesamte Breite der gegenüber liegenden, aktiven Flächen (19, 19'; 20) angeordnet sind.

18. Anlage nach Anspruch 17, wobei die gegenüber liegenden, aktiven Flächen (19, 19'; 20) der Dichtungsbacken auseinander gehend von außen nach innen nach einem Durchschnittswinkel im Bereich von 0,1° bis 3° sind.

## Revendications

1. Couvercle de récipient comprenant une bague (2) définissant une ouverture (6), ladite ouverture (6) étant fermée par une membrane (7) du type "pelable", laquelle membrane pelable est liée à une surface périphérique (L) de ladite bague (2), ladite surface de liaison (L) étant délimitée par un bord interne (Li) et un bord externe (Lo), au moyen d'une couche de matière (16) connue sous le nom de couche de scellage constituant une couche de revêtement de surface de ladite bague (2) et/ou de ladite membrane pelable (7), **caractérisé en ce que**, sur au moins une partie de la circonférence de ladite surface de liaison (L), l'épaisseur de la couche de scellage (16) est variable dans la direction radiale, à savoir sur sa largeur, en formant une largeur d'épaisseur variable, cette épaisseur augmentant sur au moins une partie de la largeur de ladite surface de liaison (L), dans la direction allant de son bord externe (Lo) vers son bord interne (Li).

2. Couvercle de récipient selon la revendication 1, dans lequel, sur ladite largeur d'épaisseur variable, l'épaisseur de la couche de scellage (16) au niveau du bord interne (Li) de la surface de liaison (L) est plus grande que son épaisseur au niveau du bord externe (Lo) de ladite surface de liaison (L).

3. Couvercle de récipient selon l'une quelconque des revendications 1 ou 2, dans lequel, sur ladite largeur d'épaisseur variable, l'épaisseur de la couche de scellage (16) augmente du bord externe (Lo) vers le bord interne (Li) de la surface de liaison (L), et ce d'une manière continue ou discontinue.

4. Couvercle de récipient selon l'une quelconque des revendications 1 à 3, dans lequel, sur ladite largeur d'épaisseur variable, l'épaisseur de la couche de scellage (16) au niveau du bord interne (Li) de la surface de liaison (L) est au moins deux fois plus grande que l'épaisseur de ladite couche de scellage (16) au niveau de la partie où ladite couche de scellage (16) est la moins épaisse.

5. Couvercle de récipient selon l'une quelconque des revendications 1 à 4, dans lequel la couche de scellage (16) constitue la couche de revêtement de surface de sa bague (2).

6. Couvercle de récipient selon l'une quelconque des revendications 1 à 4, dans lequel la couche de scellage (16) constitue la couche de revêtement de surface de sa membrane pelable (7).

7. Couvercle de récipient selon l'une quelconque des revendications 1 à 6, dans lequel, sur la bague (2) ou sur la membrane pelable (7), selon le cas, la couche de scellage (16) est liée directement à une couche de pelage distincte (15), l'épaisseur de ladite couche de pelage (15) étant variable de la même manière et dans les mêmes régions que l'épaisseur variable de la couche d'étanchéité (16).

8. Couvercle de récipient selon la revendication 7, dans lequel la bague (2) ou la membrane pelable (7), selon le cas, comprend une couche de matière adhésive complémentaire (14), disposée sur la face de la couche de pelage (15) opposée à la couche de scellage (16), l'épaisseur de ladite couche d'adhésif complémentaire (14) étant variable de la même manière et dans les mêmes régions que l'épaisseur variable des couches de scellage et de pelage (16, 15).

9. Couvercle de récipient selon l'une quelconque des revendications 1 à 8, dans lequel la membrane pelable (7) est pourvue d'une patte de traction (8).

10. Couvercle de récipient selon la revendication 9, dans lequel la largeur d'épaisseur variable de la couche d'étanchéité (16), et éventuellement de la couche de pelage (15), selon le cas, s'étend uniquement sur une partie de la circonférence de la surface de liaison (L), en regard'un anneau de traction (8).

11. Couvercle de récipient selon l'une quelconque des revendications 1 à 8, dans lequel la largeur d'épaisseur variable de la couche de scellage (16), et éventuellement de la couche de pelage (15) et de la couche d'adhésif (14), selon le cas, s'étend sur toute la circonférence sur la surface de liaison (L).

12. Récipient équipé d'un couvercle (1) selon l'une quelconque des revendications 1 à 11.

13. Procédé de fabrication d'un couvercle selon l'une quelconque des revendications 1 à 11, qui comprend les étapes suivantes consistant à :
- prévoir une bague (2) et une membrane (7), l'une ou l'autre, au moins, ayant une couche de scellage (16), et éventuellement une couche de pelage (15), chacune ayant initialement une épaisseur constante,
- thermosceller ladite bague (2) et ladite membrane (7), au niveau d'une surface de liaison (L), entre des mâchoires de scellage (17, 18), lesdites mâchoires de scellage comprenant des moyens (19, 19' ; 20) pour appliquer une pression différentielle sur la largeur de ladite surface de liaison (L), de telle sorte que l'épaisseur de ladite couche de scellage (16), et éventuellement celle de ladite couche de pelage (15), soit variable du bord externe (Lo) vers le bord interne (Li) de ladite surface de liaison (L), et ce sur au moins une partie de la circonférence de ladite surface de liaison (L).

14. Procédé selon la revendication 13, dans lequel il consiste à thermosceller ladite bague (2) et ladite membrane (7) entre deux mâchoires de scellage (17, 18) comprenant des moyens pour appliquer une pression différentielle sur la largeur d'au moins une partie de la circonférence de la surface de liaison (L), de telle sorte que l'épaisseur de ladite couche de scellage (16) et celle de ladite couche de pelage (15) augmentent du bord externe (Lo) vers le bord interne (Li) de ladite surface de liaison (L), et ce au niveau de ladite partie de circonférence, d'une manière continue ou discontinue.

15. Procédé selon la revendication 14, dans lequel l'étape de thermoscellage produit un fluage de la matière de la couche de scellage (16), et éventuellement de la matière d'au moins la couche de pelage (15), du bord externe (Lo) vers le bord interne (Li) de la surface de liaison (L).

16. Installation pour la mise en oeuvre du procédé selon l'une quelconque des revendications 13 à 15, dans laquelle les mâchoires de scellage (17, 18) ont une forme généralement annulaire et lesdits moyens pour appliquer une pression différentielle consistent en des faces opposées actives (19, 19' ; 20) desdites mâchoires de scellage (17, 18), lesdites faces opposées actives (19, 19' ; 20) ayant des formes telles que, après l'étape de thermoscellage, l'épaisseur de la couche d'étanchéité (16) et éventuellement de la couche de pelage (15), sur au moins une partie de la circonférence de la surface de liaison (L), soit variable dans la direction radiale, à savoir sur sa largeur, en formant une largeur d'épaisseur variable, ladite épaisseur augmentant sur au moins une partie de ladite surface de liaison (L), dans la direction allant de son bord externe (Lo) vers son bord interne (Li).

17. Installation selon la revendication 16, dans laquelle les mâchoires de scellage (17, 18) ont des faces opposées actives opposées (19, 19' ; 20) disposées selon un agencement légèrement divergent de l'extérieur vers l'intérieur, d'une manière continue ou discontinue sur toute la largeur desdites faces actives opposées (19, 19' ; 20).

18. Installation selon la revendication 17, dans laquelle les faces actives opposées (19, 19' ; 20) des mâchoires de scellage divergent, de l'extérieur vers l'intérieur, selon un angle moyen de 0,1° à 3°.
